# EUROPEAN PATENT APPLICATION

(11) **EP 3 189 994 A1**
(43) Date of publication of application: **12.07.2017**
(21) Application number: 15837686.3
(22) Date of filing: 12.08.2015
(51) Int. Cl.: B60J 1/00, B32B 17/06, B60J 1/02, C09J 7/00, C09J 201/00

(54) **GLASS ARTICLE FOR VEHICLES**

(30) Priority: 01.09.2014 JP 2014177285
(71) Applicant: Asahi Glass Company, Limited, Tokyo 100-8405 (JP)
(72) Inventor: KIMURA Takayuki, Tokyo 100-8405 (JP); OKAWA Jun, Tokyo 100-8405 (JP); KAWABATA Yoshihiko, Tokyo 100-8405 (JP)
(74) Representative: Müller-Boré & Partner Patentanwälte PartG mbB
(86) International application number: PCT/JP2015/072841
(87) International publication number: WO 2016/035527

(57) **Abstract**

There is provided a vehicle glass article having a functional film on a glass substrate, in which, in peeling after sticking an adhesive sheet on the functional film and using it, it is possible to peel the adhesive sheet without damaging the functional film. A vehicle glass article includes: a glass substrate; a functional film provided on a surface of at least part of the glass substrate; a glass thin sheet stuck on the functional film and for sticking, on a principal surface of an opposite side to the functional film side, an adhesive sheet having an adhesive surface smaller than the principal surface; and an adhesive layer provided between the functional film and the glass thin sheet.

## Description

### TECHNICAL FIELD

The present invention relates to a vehicle glass article, in particular relates to the vehicle glass article having a functional film on a glass substrate, the vehicle glass article capable of peeling of an adhesive sheet without damaging the functional film in the peeling after sticking the adhesive sheet on the functional film and using it.

### BACKGROUND ART

An adhesive sheet having an adhesive layer and an indication layer is often stuck on a vehicle glass article in order to indicate various items, further replacement thereof is sometimes performed as necessary. For example, the adhesive sheets such as a vehicle inspection certificate seal and an inspection seal are stuck on a vehicle-interior surface of a windshield of an automobile. These adhesive sheets are stuck by high adhesion so as not to peel until a replacement time. Then, work of scraping them using a metallic scraper and the like, or the like is performed when they are replaced.

During scraping of the adhesive sheet by using the above-described metallic scraper, the windshield is sometimes damaged, and countermeasures for preventing it are considered. For example, it is proposed that at a time of sticking an adhesive sheet, the adhesive sheet is stuck on a base layer having an adhesive layer with adhesion lower than the adhesive sheet and the base layer is stuck on a windshield with the above-described adhesive layer interposed therebetween, and at a replacement time, the adhesive sheet is peeled together with the base layer and the adhesive layer (refer to Patent Reference 1).

Meanwhile, conventionally, an attempt has been made to make a vehicle-interior environment better or make visibility good by providing various functional films, for example, an antifogging film, an antifouling film, an ultraviolet absorbing film, an infrared absorbing film, and the like for a glass article for a vehicle. Also in the glass article for a vehicle which has such functional films, an adhesive sheet is stuck and replaced similarly to the above. When the adhesive sheets are stuck on the functional film, in particular, on a functional film mainly constituted of resin, there has been a problem that scraping them using the above-described metallic scraper at a replacement time causes damage of the functional film without resisting it.

Further, it is feared that on the functional film of the glass article for a vehicle which has the above-described functional film, damage occurs similarly also when the base layer with the adhesive layer which is mentioned in Patent Reference 1 is stuck and peeled.

### PRIOR ART DOCUMENT

### PATENT REFERENCE

Patent Reference 1: JP-A 2012-207114

### SUMMARY OF INVENTION

### PROBLEMS TO BE SOLVED BY THE INVENTION

The present invention has been made from the above-described viewpoint, and it is an object thereof to provide a vehicle glass article having a functional film on a glass substrate, in which, in peeling after sticking an adhesive sheet on the functional film and using it, it is possible to peel the adhesive sheet without damaging the functional film.

### MEANS FOR SOLVING THE PROBLEM

A vehicle glass article of the present invention includes: a glass substrate; a functional film provided on a surface of at least part of the glass substrate; a glass thin sheet stuck on the functional film and for sticking, on a principal surface of an opposite side to the functional film side, an adhesive sheet having an adhesive surface smaller than the principal surface; and an adhesive layer provided between the functional film and the glass thin sheet.

### EFFECT OF THE INVENTION

According to the present invention, it is possible to provide a vehicle glass article having a functional film on a glass substrate, in which, in peeling after sticking an adhesive sheet on the functional film and using it, it is possible to peel the adhesive sheet without damaging the functional film.

### BRIEF DESCRIPTION OF THE DRAWINGS

[Fig. 1] is a front view of one example of an embodiment of an automobile windshield which is a vehicle glass article of the present invention, which is seen from a vehicle-interior side.
[Fig. 2] is a sectional view taken along the X-X line of the automobile windshield illustrated in Fig. 1.
[Fig. 3] is an enlarged front view of a stuck portion when an adhesive sheet is stuck on the automobile windshield illustrated in Fig. 1, which is seen from the vehicle-interior side.
[Fig. 4] is a sectional view taken along the Y-Y line of the adhesive sheet stuck portion of the automobile windshield illustrated in Fig. 3.
[Fig. 5] is an enlarged front view of a stuck portion when an adhesive sheet is stuck in another example of the embodiment of the automobile windshield which is the vehicle glass article of the present invention, which is seen from the vehicle-interior side.
[Fig. 6] is a sectional view taken along the Z-Z line of the adhesive sheet stuck portion of the automobile windshield illustrated in Fig. 5.

### DETAILED DESCRIPTION

Hereinafter, an embodiment of the present invention will be described. Note that the present invention is not construed as limitation on the following description. As vehicles in a vehicle glass article of the present invention, for example, an electric railcar, an automobile, and the like can be cited, and as a glass article, window glass such as a windshield, a side window, and a rear window, and the like can be cited.

The vehicle glass article of the present invention is used suitably to, in particular, an automobile windshield. Hereinafter, the embodiment of the vehicle glass article of the present invention will be described with reference to the drawings while taking the automobile windshield as an example.

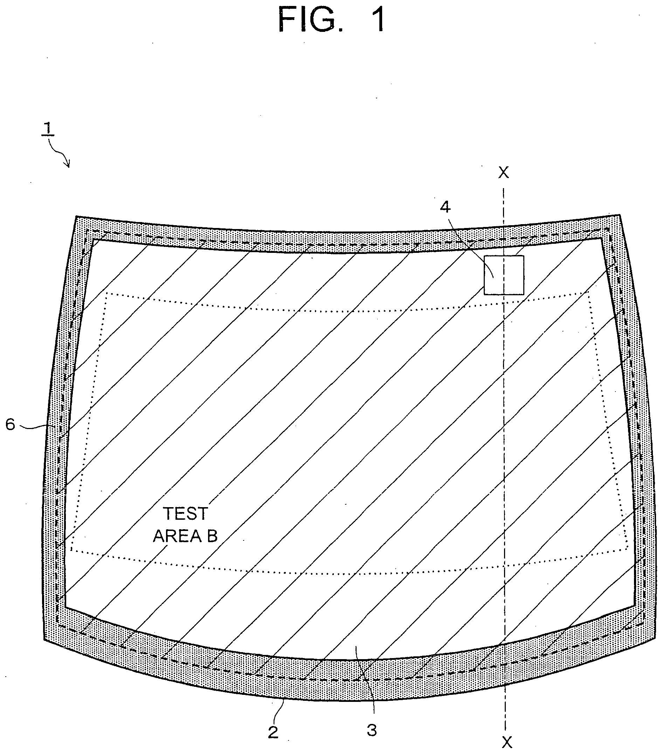

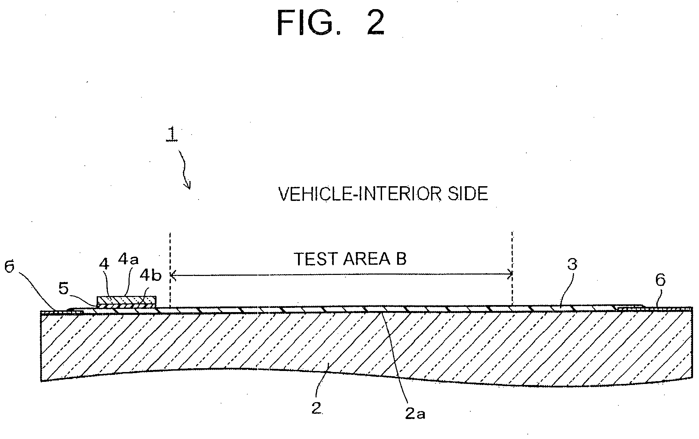

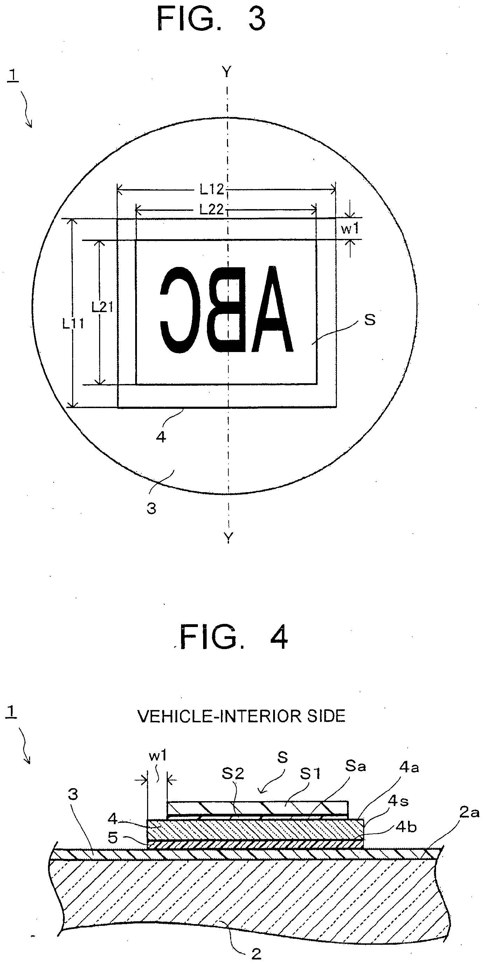

Fig. 1 and Fig. 2 are a front view of one example of the embodiment of the automobile windshield which is the vehicle glass article of the present invention, which is seen from a vehicle-interior side, and a sectional view taken along the X-X line thereof. Fig. 3 and Fig. 4 are an enlarged front view of a stuck portion when an adhesive sheet is stuck on the automobile windshield illustrated in Fig. 1, which is seen from the vehicle-interior side, and a sectional view taken along the Y-Y line thereof.

The upper side of the front view in Fig. 1 corresponds with the upper side of the automobile windshield. The sectional view in Fig. 2 is a sectional view whose left side is the upper side of the automobile windshield. Note that notations of "upper" and "lower" to be used in the following description indicate the upper side and the lower side at a time of mounting the automobile windshield on an automobile, respectively. Similarly, "vehicle-interior side" indicates a vehicle-interior side at a time of mounting the automobile windshield on the automobile.

An automobile windshield 1 illustrated in Fig. 1 and Fig. 2 has: a glass substrate 2; a black ceramic layer 6 which is a black layer formed in a frame shape on a peripheral edge portion of a principal surface 2a of the vehicle-interior side of the glass substrate 2; and a functional film 3 provided on the principal surface 2a of the vehicle-interior side of the glass substrate 2 so that its end portion is more interior than an end portion of the glass substrate 2 and exists in a formation area of the black ceramic layer 6. Note that in the vehicle glass article of the present invention, the black ceramic layer is a layer which is provided not essentially but optionally.

The automobile windshield 1 has an adhesive layer 5 and a glass thin sheet 4 in the order thereof on part of the functional film 3. The glass thin sheet 4 is provided in order to stick, on a principal surface 4a of an opposite side to a principal surface 4b of the functional film 3 side, an adhesive sheet S having an adhesive surface Sa smaller than the principal surface 4a. Hereinafter, each component constituting the automobile windshield (also simply referred to as "windshield" below.) 1 will be described.

### (Glass Substrate)

As material of the glass substrate 2 to be used for the windshield 1, there can be cited ordinary soda lime glass (also referred to as soda lime silicate glass), aluminosilicate glass, borosilicate glass, alkali-free borosilicate glass, quartz glass, or the like. As the glass substrate 2, the soda lime glass is particularly preferred among them. A forming method of the glass substrate 2 is not particularly limited either. In a case of the windshield 1, for example, the glass substrate 2 formed by a float process and the like is preferred. As the glass substrate 2, it is possible to use a glass substrate constituted of glass which absorbs ultraviolet rays and/or infrared rays or tempered glass. Laminated glass in which a plurality of glass plates are made to adhere to one another while sandwiching an intermediate film is also applicable.

A shape of the glass substrate 2 may be a flat plate, or the whole surface or part thereof may have a curvature. A thickness of the glass substrate 2 can be appropriately selected. In the case of the windshield 1, the thickness of the glass substrate 2 is preferably 3.5 to 5.5 mm. For example, when the windshield 1 is laminated glass in which an intermediate film is laminated between two glass plates, a total of thicknesses of the two glass plates and a thickness of the intermediate film is preferably in the above-described numerical range.

Note that also when the vehicle glass article of the present invention is used besides the windshield, glass made of the same material as the above-described one is appropriately selected according to application as the glass substrate. The shape, the thickness, and the like are also appropriately selected according to application similarly. A forming method of the glass is not particularly limited either.

### (Black Ceramic Layer)

The black ceramic layer 6 is the layer which is provided optionally as described above. The black ceramic layer ordinarily plays a role of covering a vehicle body mounting portion of the windshield by being provided in the frame shape on the peripheral edge portion of the principal surface of the glass substrate as described above.

When the glass substrate is a single substrate such as single plate glass, the black ceramic layer is provided on at least one principal surface of the glass substrate. The black ceramic layer is preferred to be provided on a vehicle-interior side surface of a window glass 2 as provided in the windshield 1, and may be provided on a vehicle-exterior side surface as necessary. Further, when the laminated glass is used as the window glass, the black ceramic layer may also be formed on a vehicle-interior side surface of a glass plate of a vehicle-exterior side.

Further, regarding the peripheral edge portion where the black ceramic layer is formed, the black ceramic layer need not necessarily be formed on all the four sides of the peripheral edge portion and may be formed on part of the peripheral edge portion. A width of the black ceramic layer is a width necessary for the covering and need not necessarily be the same width in the upper, lower, left, and right sides, further the width may change in one side.

As the black ceramic layer, a black ceramic layer to be formed on the glass substrate by a conventionally publicly known method can be applied without being particularly limited. Specifically, there can be cited a black ceramic layer formed by applying a black ceramic paste, in which powder of a heat resistant black pigment is added to resin and a solvent together with a low-melting point glass powder to be kneaded, in a desired area on the glass substrate by printing or the like, and by heating and baking the paste.

### (Functional Film)

The functional film 3 is not limited as long as it is a film which imparts various functions required of the windshield. Specifically, there can be cited an antifogging film, an antifouling film, an ultraviolet absorbing film, an infrared absorbing film, a low-reflection film, and the like. In the windshield 1 illustrated in Fig. 1 and Fig. 2, the functional film 3 is provided in the substantially whole area on the principal surface 2a of the vehicle-interior side of the glass substrate 2 so that its end portion is more interior than the end portion of the glass substrate 2 and exists in the formation area of the black ceramic layer 6.

The above functional film 3 is ordinarily provided so as to secure visibility of a driver in the windshield 1. Specifically, in a test area B specified in JIS R3212 (1998), a visible light transmittance Tv (%) of the glass substrate 2 with the functional film 3 which is measured in accordance with a rule of JIS R3211 is set to 70% or more. Transparency is ordinarily set to be high in the whole of the windshield including the test area B.

In the vehicle glass article of the present invention, an arrangement place of the functional film is not particularly limited as long as it is a surface of at least part of the glass substrate. The functional film may be formed on the whole area of each of both principal surfaces of the glass substrate as necessary. Further, the functional film may be partially formed on one principal surface.

When the functional film is a functional film mainly constituted of resin or when the functional film mainly constituted of the resin is laminated on a functional film mainly constituted of an inorganic substance, there is a large possibility that the functional film is damaged in replacing an adhesive sheet. Accordingly, in such a functional film, in particular, an effect of protecting the functional film by sticking the later-described glass thin sheet on a stuck place of the adhesive sheet becomes remarkable.

As such a functional film mainly constituted of the resin, the antifogging film, the antifouling film, or the like which is mainly constituted of a hydrophilic resin or a water absorbing resin can be cited. When the functional film is the antifogging film, a resin having a hydrophilic group or a hydrophilic chain (such as polyoxyethylene group) can be cited without being particularly limited as the water absorbing resin to be used. The water absorbing resin may be a linear polymer or a non-linear polymer, and a resin which is a non-linear polymer having a three-dimensional network structure is preferred in an aspect of durability or the like.

As the water absorbing resin constituted of a linear polymer, specifically, there can be cited hydroxypropyl cellulose, polyvinyl alcohol, polyvinyl acetal, polyvinylpyrrolidone, polyvinyl acetate, and the like. As the resin which is the non-linear polymer having the three-dimensional network structure, there are a cured product of a curable resin, a crosslinked resin in which a crosslinkable resin is crosslinked, and the like. As the three-dimensionally network-structured resin, there can be cited a cured product of a curable epoxy resin, a polyurethane resin, a crosslinked acrylic resin, and the like.

The functional film may be a single layer film or a laminated film in which two or more different types of films are laminated. In a case of the antifogging film, having a two-layer structure in which a layer with a low water absorbing property is provided on the glass substrate side and a layer with a high water absorbing property is provided on the layer makes it possible to achieve both peeling resistance and a high water absorbing property, which is therefore preferred. A thickness of the functional film is set to a thickness which allows each functional film to function. In the case of the antifogging film, as the two-layer structured antifogging film mainly constituted of the cured product of the curable epoxy resin, a thickness of 3 to 30 µm is preferred.

The functional film can be formed by a conventionally publicly known method. For example, the functional film can be formed on the glass substrate by applying a liquid composition obtained by producing the liquid composition containing a material itself constituting the functional film or the raw material of it and, normally, a solvent on a predetermined surface of the glass substrate and by thereafter drying, reacting, and the like as necessary.

### (Glass Thin Sheet)

In the windshield 1 illustrated in Fig. 1 and Fig. 2, the glass thin sheet 4 is arranged on an upper side of the test area B specified in JIS R3212 (1998) with the adhesive layer 5 interposed therebetween. Note that in the front view of the windshield 1 illustrated in Fig. 1, an area surrounded by dotted lines is the test area B.

When the vehicle glass article in the present invention is the windshield, the glass thin sheet is provided together with the adhesive layer outside a visual field area where the visibility of a driver in the windshield is secured. Further, the visual field area of the driver preferably includes at least the test area B specified in JIS R3212 (1998). That is, when the vehicle glass article is the windshield, the glass thin sheet is preferably arranged outside the above-described test area B with the adhesive layer interposed therebetween, for example, as illustrated in Fig. 1 and Fig. 2.

The glass thin sheet 4 is provided in order to stick, on the principal surface 4a of the opposite side to the principal surface 4b of the functional film 3 side, the adhesive sheet S having the adhesive surface Sa smaller than the principal surface 4a. Fig. 3 and Fig. 4 are the enlarged front view which illustrates a state where the adhesive sheet S is stuck on the principal surface 4a of the glass thin sheet 4 of the windshield 1, and is seen from the vehicle-interior side, and the sectional view taken along the Y-Y line thereof.

The adhesive sheet S illustrated in Fig. 3 and Fig. 4 is formed by an adhesive layer S2 and an indication layer S1 being laminated in order from the glass thin sheet 4 side. The adhesive layer S2 is transparent, and the indication layer S1 has an indication portion where characters are printed on the glass thin sheet 4 side (vehicle-exterior side) so as to be indicated as "ABC" by being seen from the vehicle-exterior side. The indication layer S1 illustrated in Fig. 3 and Fig. 4 is constituted of a transparent material, and the characters seen from the vehicle-interior side are inverted characters of "ABC".

A shape of the principal surface 4a of the glass thin sheet 4 which the windshield 1 illustrated in Fig. 1 to Fig. 4 has is a rectangle in which a length of short sides is L11 and a length of long sides is L12. Further, the adhesive surface Sa of the adhesive sheet S illustrated in Fig. 3 and Fig. 4 is a rectangle in which a length of short sides is L21 shorter than the above-described length L11 of the short sides of the principal surface 4a of the glass thin sheet 4 and a length of long sides is L22 shorter than the above-described length L12 of the long sides of the principal surface 4a of the glass thin sheet 4.

Hence the adhesive surface Sa of the adhesive sheet S is smaller than the principal surface 4a of the glass thin sheet 4. Incidentally, that the adhesive surface Sa of the adhesive sheet S is smaller than the principal surface 4a of the glass thin sheet 4 means that the adhesive surface Sa can be laminated on the principal surface 4a without protruding an outer periphery of the adhesive surface Sa from an outer periphery of the principal surface 4a.

Further, in the above-described case, in the relationship of the lengths of the short sides and the lengths of the long sides between the principal surface 4a of the glass thin sheet 4 and the adhesive surface Sa of the adhesive sheet S, respectively, preferably, L11 is about 1.2 to 2 times of L21, and L12 is about 1.2 to 2 times of L22. Further, a distance w1 from the outer periphery of the glass thin sheet 4 to the outer periphery of the adhesive sheet S is preferably about 5 to 10 mm. The distance w1 may be the same or different in four sides.

A size of the principal surface 4a of the glass thin sheet 4 which the windshield 1 illustrated in Fig. 1 to Fig. 4 has is provided with a size corresponding to one adhesive sheet S, for example. However, as long as the outer periphery of the adhesive sheet does not protrude from the principal surface 4a of the glass thin sheet 4, it is also possible to apply the windshield 1 to sticking of two or more adhesive sheets having an adhesive surface smaller than the adhesive surface Sa of the adhesive sheet S.

In the vehicle glass article of the present invention, the glass thin sheet to be provided on the functional film on the glass substrate with the adhesive layer interposed there between may be set to a size which allows correspondence to one adhesive sheet with a specific size, or may be set to a size which allows correspondence to a plurality of adhesive sheets with the specific size. In a case of the windshield, depending on the type of automobile, when the glass thin sheet is provided on the upper side of the test area B as an area other than the test area B, it is possible to use a glass thin sheet having a size of about 100 x 100 mm at the maximum.

As the adhesive sheet, specifically, there can be cited an adhesive sheet such as a vehicle inspection certificate sheet, an inspection sheet, a pass permit sheet, or a parking sheet which is stuck on the windshield so as to be recognized from the vehicle-exterior side. For example, in the vehicle inspection certificate sheet, the indication layer has the indication portion constituted of a numeric character which indicates a month of a next safety inspection, or the like instead of the above-described "ABC" on the glass thin sheet 4 side (vehicle-exterior side). As long as the indication portion can be recognized by being seen from the vehicle-exterior side, the indication layer need not necessarily be transparent.

As material of the glass thin sheet, there can be cited the ordinary soda lime glass, the aluminosilicate glass, the borosilicate glass, the alkali-free borosilicate glass, the quartz glass, or the like. As the glass thin sheet, it is also possible to use a glass thin sheet constituted of the glass which absorbs ultraviolet rays and/or infrared rays or the tempered glass. As glass constituting the glass thin sheet, in particular, from the viewpoint of scratch resistance with respect to processing with a metallic scraper or the like at a time of replacement of the adhesive sheet, the aluminosilicate glass is preferred.

A thickness of the glass thin sheet is appropriately selected according to the type of glass, the shape of the glass substrate to be arranged, or the like. The thickness of the glass thin sheet is, specifically, preferably 1 mm or less, more preferably 0.7 mm or less, and particularly preferably 0.4 mm or less. When the thickness of the glass thin sheet exceeds 1 mm, the outer periphery of the glass thin sheet is conspicuous, which is not preferred in view of an appearance. Although a lower limit of the thickness of the glass thin sheet is not particularly limited, the thickness of the glass thin sheet is preferably 0.05 mm or more and more preferably 0.3 mm or more from the viewpoint of manufacture.

Note that the glass substrate often has a curvature in the windshield, and therefore a curved surface-following property is particularly required of the glass thin sheet. In this case, it is preferable that the thickness of the glass thin sheet is 1 mm or less and a thickness which sufficiently follows a curved surface of the glass substrate.

In the glass thin sheet 4 which the windshield 1 illustrated in Fig. 1 to Fig. 4 has, its end surface 4s is subjected to anti-reflection processing. As the anti-reflection processing, specifically, polishing, etching, or the like can be cited. Subjecting the end surface of the glass thin sheet to the anti-reflection processing makes it possible to suppress glare of the end surface, and thereby the outer periphery of the glass thin sheet is not conspicuous, resulting in a good appearance.

### (Adhesive Layer)

In the windshield 1 illustrated in Fig. 1 and Fig. 2, the glass thin sheet 4 is arranged on the functional film 3 with the adhesive layer 5 interposed therebetween as described above. The adhesive layer 5 has the same size and the same shape as those of the glass thin sheet 4 except the thickness thereof. Note that without limiting to the windshield 1, in the vehicle glass article of the present invention, ordinarily, the glass thin sheet and the adhesive layer are set to have the same size and the same shape except the thicknesses thereof.

As material constituting the adhesive layer, for example, there can be cited an acryl-based adhesive, a silicone-based adhesive, a butadiene-based adhesive, a polyurethane-based adhesive, and the like. The type of adhesive is appropriately selected according to the type of the functional film or the glass thin sheet, the size of the glass thin sheet, or the like, and required adhesion or the like.

The acryl-based adhesive is a polymer containing an acrylic monomer unit as a main component. As an acrylic monomer, there can be cited a (meth)acrylic acid, an itaconic acid, an (anhydrous) maleic acid, an (anhydrous) fumaric acid, a crotonic acid, and their alkyl esters. As the number of carbon atoms of an alkyl group of the alkyl esters, for example, 1 to 10 can be cited. Here, "(meth)acrylic acid" is used as the one in which, an acrylic acid and a methacrylic acid are collectively referred to. (Meth)acrylate is also the same.

In the acryl-based adhesive, in order to enhance cohesion of the adhesive, use of a monomer having a functional group capable of becoming a crosslinking point, for example, a hydroxy group, a glycidyl group, and the like is preferred. As the monomer having the functional group capable of becoming the crosslinking point, for example, there can be preferably cited hydroxyethyl (meth)acrylate, glycidyl (meth)acrylate, and the like.

When the monomer having the functional group capable of becoming the crosslinking point is used, it is preferable to add a crosslinking agent. Reacting the crosslinking agent with the functional group makes it possible to obtain a polymer having the crosslinking point, and thereby the cohesion can be secured in being used as the adhesive. There can be cited a melamine resin, a urea resin, an epoxy resin, a metal oxide, metallic salt, a metal hydroxide, a metal chelate, polyisocyanate, a carboxy group-containing polymer, an acid anhydride, polyamine, or the like, as the crosslinking agent, which is appropriately selected according to the type of the functional group capable of becoming the crosslinking point.

As one example to be preferred as the polyurethane-based adhesive, there can be cited the one obtained from a light-curable resin composition as a raw material constituted of a liquid composition which contains a curable compound having light curability, a photopolymerization initiator, and as necessary, a non-curable oligomer.

The curable compound in the light-curable resin composition is constituted of one or more types of curable compounds in which a curing reaction occurs at a time of curing of the light-curable resin composition. At least one type of the curable compound is a compound having a hydroxy group which does not react at a time of the curing of the light-curable resin composition. It is preferable that the curable compound contains one or more types of oligomers (A) which have a curable group and whose number average molecular weight is 1000 to 100000 and one or more types of monomers (B) which have a curable group and whose molecular weight is 125 to 600. It is preferable that a urethane oligomer is used as the oligomer (A) and one or more selected from alkyl acrylate and alkyl methacrylate which have an alkyl group having 8 to 22 carbon atoms are used as the monomer (B). As the photopolymerization initiator contained in the light-curable resin composition, there can be cited an acetophenone-based, a ketal-based, a benzoin-based, a benzoin ether-based, a phosphine oxide-based, a benzophenone-based, a thioxanthone-based, or a quinone-based photopolymerization initiator, and the like.

The non-curable oligomer is an oligomer containing a hydroxy group which does not undergo the curing reaction with the curable compound in the composition at a time of the curing of the light-curable resin composition. As an example of the non-curable oligomer containing the hydroxy group, high molecular weight polyol or the like can be cited.

As one example of the preferable light-curable resin composition, there can be cited a composition which contains an urethane oligomer as the oligomer (A), which is obtained by reacting with a monomer and a prepolymer having an isocyanate group which is obtained by reacting a polyisocyanate compound with a polyoxypropylene diol in which part of an oxypropylene group is substituted by an oxyethylene group; a polyoxypropylene diol in which part of an oxypropylene group is substituted by an oxyethylene group, which is the same as a raw material of the urethane oligomer as the non-curable oligomer; and a monomer having a hydroxy group as the monomer (B).

In these adhesive layers, besides the above-described adhesives, various additives such as an ultraviolet absorbent, an infrared absorbent, a curing agent, a plasticizer, and an adhesion imparting component can be contained as long as they are in a range where an effect of the present invention is not inhibited.

A thickness of the adhesive layer is not particularly limited as long as desired adhesion can be obtained, and a thickness according to materials of the adhesive layer, the functional film, the glass thin sheet, and the like may be appropriately selected. Specifically, the thickness of the adhesive layer is preferably 0.5 µm to 100 µm and suitably preferable 5 to 30 µm.

The adhesive layer is formed ordinarily on one principal surface of the glass thin sheet, on the principal surface 4b of the functional film 3 side of the glass thin sheet 4 in the sectional view illustrated in Fig. 4 and is made to adhere to a predetermined position on the functional film 3 together with the glass thin sheet 4 so as to be in the order of the adhesive layer 5 and the glass thin sheet 4 from the functional film side. Formation of the adhesive layer on the glass thin sheet can be performed by an ordinary method. Specifically, a previously prepared adhesive composition is applied in a uniform thickness on an adhesive layer forming surface of the glass thin sheet by a general coating film-forming method such as, for example, a bar coating method, a reverse coating method, a gravure coating method, a die coating method, or a roll coating method.

The adhesive composition is constituted of, for example, an adhesive or an adhesive raw material which becomes an adhesive by reacting, and a solvent, further an optional component to be appropriately blended as necessary. An adhesive composition coating film thereafter becomes the adhesive layer through drying, as necessary, curing processing by heat or light.

As described above, the vehicle glass article of the present invention has been described by exemplifying the windshield 1 illustrated in Fig. 1 to Fig. 4. In the above-described windshield 1, the end surface 4s of the glass thin sheet 4 is subjected to the anti-reflection processing in order to eliminate a poor appearance due to a conspicuous outer periphery of the glass thin sheet 4.

In the vehicle glass article of the present invention, the outer periphery of the glass thin sheet may be clearly exhibited by providing a band-shaped black layer on a peripheral edge portion of the principal surface of the glass thin sheet instead of the above-described anti-reflection processing and the appearance may be thereby improved. Note that the anti-reflection processing for the end surface of the glass thin sheet and the above-described provision of the black layer may be performed in combination. Further, when the glass thin sheet has the band-shaped black layer on the peripheral edge portion of the principal surface, each element is adjusted so that an area where a provision area of the black layer on the principal surface of the glass thin sheet is excepted is larger than the adhesive surface of the adhesive sheet.

Note that the peripheral edge portion where the black layer is formed need not necessarily be all the four sides of the peripheral edge portion of the glass thin sheet, and the present invention also includes a mode in which the black layer is formed on part of the peripheral edge portion.

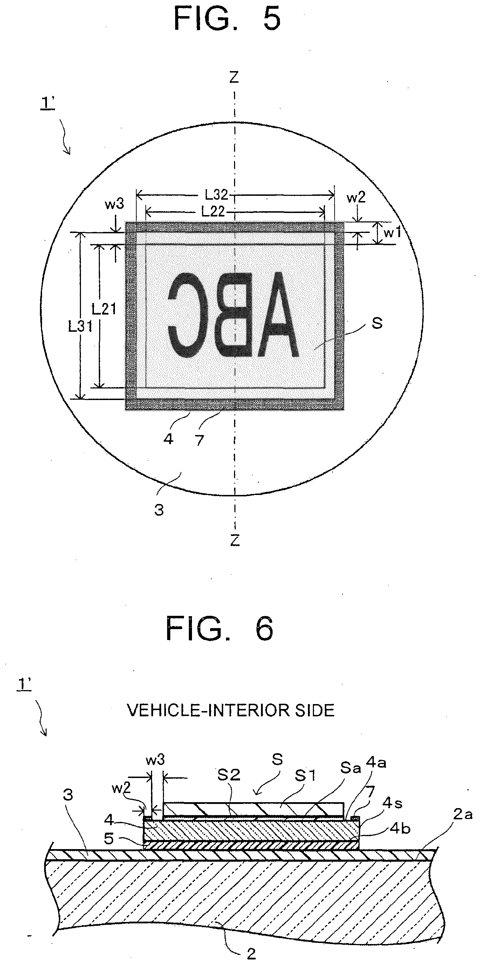

Fig. 5 and Fig. 6 illustrate an enlarged front view of a stuck portion when the adhesive sheet S is stuck on a windshield l' having the same construction as that of the above-described windshield 1 illustrated in Fig. 1 to Fig. 4 except that the glass thin sheet 4 has a black layer 7 in a frame shape on a peripheral edge portion of the principal surface 4a, which is seen from the vehicle-interior side, and a sectional view taken along the Z-Z line thereof, respectively. The windshield l' will be described below regarding only a portion different from the above-described windshield 1.

### (Black Layer)

As illustrated in Fig. 5 and Fig. 6, the black layer 7 is provided in the frame shape on the peripheral edge portion of the principal surface 4a of the opposite side to the principal surface 4b of the functional film 3 side of the glass thin sheet 4. A width w2 of the black layer 7 is not particularly limited as long as it is a width which allows improvement in the above-described appearance. The width w2 of the black layer 7 may be the same or different in four sides. The width w2 of the black layer 7 is specifically preferably 1 to 3 mm.

The adhesive sheet S illustrated in Fig. 5 and Fig. 6 is the same as the above-described adhesive sheet S illustrated in Fig. 3 and Fig. 4, and also in a size of the principal surface 4a of the glass thin sheet 4, in the windshield 1 and in the windshield l' are the same. Here, as illustrated in Fig. 5, in the windshield 1', a relationship of a length L31 of short sides and a length L32 of long sides in an area where the black layer 7 is excepted from the principal surface 4a of the glass thin sheet 4 between the length L21 of short sides and the length L22 of long sides the adhesive surface Sa of the adhesive sheet S is satisfied L31 > L21 and L32 > L22 respectively.

Further, in a case of the above, a distance w3 from an outer periphery of the area where the black layer 7 is excepted from the principal surface 4a of the glass thin sheet 4 to the outer periphery of the adhesive sheet S is represented by w3 = w1 - w2, and preferably about 5 to 10 mm. The distance w3 may be the same or different in four sides.

In the windshield l' illustrated in Fig. 5 and Fig. 6, the black layer 7 is formed only on the peripheral edge portion of the principal surface 4a of the glass thin sheet 4, and may be formed sequentially in a form of covering an end surface 4s of the glass thin sheet 4 from the peripheral edge portion. Further, the black layer is not formed on the principal surface 4a of the glass thin sheet 4, and may be formed to be band-shaped in a range of the width w2 on a peripheral edge portion of the principal surface 4b of an opposite side to the principal surface 4a.

The black layer 7 can be formed by the same method in which the same black layer as the above black layer is formed ordinarily on a glass plate, for example, pigment print.

Note that "black" of the black layer may be adjusted so that visible light is not transmitted to such a degree that at least the outer periphery of the glass thin sheet can be recognized as a boundary. From this viewpoint, a black pigment to be used also includes a combination of pigments which become black as a result of the combination of a plurality of colored pigments. Further, from the same viewpoint, the whole of the black layer may be formed as a sequential integrated film or may be formed in a dot pattern which is an aggregate of minute dots, or the like.

As described above, the windshield l illustrated in Fig. 1 to Fig. 4 and the windshield 1' illustrated in Fig. 5 and Fig. 6 have been described, but the vehicle glass article of the present invention is not limited to this. These can be changed or modified in the range without departing from the spirit and the scope of the present invention.

### EXAMPLES

### [Sticking of Adhesive Sheet, Scratch Resistance Test for Peeling]

Test examples in which a test was conducted regarding scratch resistance when an adhesive sheet was stuck and peeled with respect to four types of glass thin sheets to be used as a glass thin sheet in a vehicle glass article of the present invention, a laminated glass (however, it has a test size.) to be used ordinarily as an automobile windshield, and an antifogging film-attached laminated glass in which an antifogging film was formed as a functional film in the laminated glass will be described below.

### <Test Sample>

Four types of materials provided for the test as glass thin sheets A to D are as follows. Note that all shapes of the glass thin sheets A to D were set to 50 × 50 mm, a 0.7 mm thickness.
(1) Glass thin sheet A; Dragon Trail (product name, made by ASAHI GLASS COMPANY, chemically strengthened aluminosilicate glass)
(2) Glass thin sheet B; AN100 (product name, made by ASAHI GLASS COMPANY, alkali-free borosilicate glass)
(3) Glass thin sheet C; made by ASAHI GLASS COMPANY, chemically strengthened soda lime glass
(4) Glass thin sheet D; made by ASAHI GLASS COMPANY, chemically strengthened soda lime glass (a type having strengthened stress higher than the glass thin sheet C of (3))

As the laminated glass, laminated glass in which a polyvinyl butyral resin intermediate film having a 0.75 mm thickness is laminated between two glass plates (whose material is soda lime glass) having 100 × 100 mm size, and a 2 mm thickness was used.

The antifogging film-attached laminated glass was produced on one principal surface of the above-described laminated glass using two types of compositions prepared as follows and provided for the test.

### <Preparation of Composition for Forming Base Layer>

In a glass container in which a stirrer and a temperature gauge were set, propylene glycol monomethyl ether (150.00 g, made by Daishin Chemical Co., Ltd.), bisphenol A diglycidyl ether (93.17 g, jER828 (product name, made by Mitsubishi Chemical Corporation)), polyoxyalkylene triamine (38.20 g, JEFFAMINE T403 (product name, made by Huntsman Corporation)), and aminosilane (18.63 g, KBM903 (product name, made by Shin-Etsu Chemical Co., Ltd.)) were put and stirred at 25°C for 30 minutes. Then, it was diluted to five times with propylene glycol monomethyl ether (made by Daishin Chemical Co., Ltd.), and a leveling agent (0.375 g, BYK307 (product name, made by BYK-Chemie)) was added thereto, thereby obtaining a composition for forming base layer (A-1).

### <Preparation of Composition for Forming Water Absorbing Layer>

In a glass container in which a stirrer and a temperature gauge were set, ethanol (586.30 g, made by Kanto Chemical Co., Inc.), methylethylketone (196.37 g, made by Kanto Chemical Co., Inc.), aliphatic polyglycidyl ether (248.73 g, Denacol EX-1610, (product name, made by Nagase ChemteX Corporation)), and glycerin polyglycidyl ether (206.65 g, Denacol EX-313, (product name, made by Nagase ChemteX Corporation)) were added and stirred for 10 minutes. Then, organosilica sol (29.92 g, NBAC-ST (product name, made by Nissan Chemical Industries, Ltd.), mean primary particle diameter: 10 to 20 nm, SiO₂ content of 30 mass%), and 2-methylimidazole (10.29 g, made by Shikoku Chemicals Corporation) were added and stirring was further performed for 10 minutes.

Then, polyoxyalkylene triamine (90.70 g, JEFFAMINE T403 (product name, made by Huntsman Corporation)) was added and stirring was performed at 25°C for one hour. Then, aminosilane (92.57 g, KBM903 (product name, made by Shin-Etsu Chemical Co., Ltd.)) was added while stirring, and stirring was further performed at 25°C for three hours. Thereafter, methylethylketone (438.46 g, made by Kanto Chemical Co., Inc.) was added while stirring. Moreover, a leveling agent (0.95 g, BYK307 (product name, made by BYK-Chemie)) was added while stirring, thereby obtaining a composition for forming water absorbing layer (A-2).

### <Manufacture of Antifogging Film-Attached Laminated Glass>

An antifogging film-forming surface of the above-described laminated glass was polished and washed with a cerium oxide and dried. On the antifogging film-forming surface of the laminated glass, the composition for forming base layer A-1 obtained above was applied by flow coating and retained in an electric furnace at 100°C for 30 minutes to form a base layer. Then, on a surface of the formed base layer, the composition for forming water absorbing layer A-2 obtained above was applied by flow coating and retained in the electric furnace at 100°C for 30 minutes to form a water absorbing layer, thereby obtaining antifogging film-attached laminated glass having an antifogging film constituted of the two layers.

### <Scratch Resistance Test>

The test was conducted by the following process using the glass thin sheets A to D, the laminated glass, and the antifogging film-attached laminated glass as test samples and evaluation was made.

On one principal surface regarding the glass thin sheets A to D and the laminated glass, on the antifogging film regarding the antifogging film-attached laminated glass, an adhesive sheet (made by Nitto Denko Corporation, polyester adhesive tape No. 31B (product name)) having a 30 mm width and a 40 mm length was stuck.

After sticking the adhesive sheet for one hour, a blade edge of a metallic scraper (manufactured by KTC, DX KZSS-25 (product name)) was inserted to a position of a width of about 5 mm from one end in a long direction of the adhesive sheet between the adhesive sheet and the test sample, slid as it was in a lateral direction (from right to left), and made to peel the above-described one end of the adhesive sheet. After repeating this action three times, the whole of the adhesive sheet was peeled by holding the one peeled end portion with a hand and pulling it from one end to another end.

After wiping out an adhesive residue of the adhesive sheet which has remained on the sample with ethanol, presence or absence of a scratch was visually confirmed. Table 1 represents the result.

**[Table 1]**

| Test sample | Presence or Absence of scratch |
|---|---|
| Glass thin sheet A | Absence |
| Glass thin sheet B | Absence |
| Glass thin sheet C | Absence |
| Glass thin sheet D | Absence |
| Laminated glass | Absence |
| Antifogging film-attached laminated glass | Presence |

### (Example 1)

The same antifogging film-attached laminated glass as the one which was used for the above-described scratch resistance test was produced. Besides this, an adhesive layer-attached glass thin sheet D which had an adhesive layer constituted of an acryl-based adhesive and having a 100 µm thickness in the whole area of one principal surface of the same glass thin sheet D as the one used above was produced. The adhesive layer-attached glass thin sheet D was stuck on the antifogging film of the antifogging film-attached laminated glass so that the adhesive layer is on the antifogging film side, thereby obtaining a glass article A.

Similarly to the above, an adhesive sheet was stuck on the glass thin sheet D of the obtained glass article A and thereafter peeled, and scratch resistance was evaluated, thereby resulting in "No scratch" which means absence of a scratch.

### (Example 2)

A glass article B was obtained in a similar manner to Example 1 except using a glass thin sheet E in which a thickness of the glass thin sheet D was set to 0.4 mm, instead of the glass thin sheet D.

### (Examples 3, 4)

The above-described similar glass thin sheet D and glass thin sheet E were prepared and formed as a glass thin sheet F and a glass thin sheet G by subjecting their end surfaces to polishing processing (anti-reflection processing). A glass article C and a glass article D were obtained in the similar manner to Example 1 except using the glass thin sheet F and the glass thin sheet G instead of the glass thin sheet D, respectively.

### (Examples 5, 6)

The above-described similar glass thin sheet D and glass thin sheet E were prepared and formed as a glass thin sheet H and a glass thin sheet I by forming a black layer in a frame shape on each peripheral edge portion of one principal surfaces of the glass thin sheet D and the glass thin sheet E by pigment print. A glass article E and a glass article F were obtained in the similar manner to Example 1 except using the glass thin sheet H and the glass thin sheet I instead of the glass thin sheet D, respectively. Note that in the glass article E and the glass article F, the glass thin sheet H and the glass thin sheet I were each arranged on an antifogging film of antifogging film-attached laminated glass with an adhesive layer interposed therebetween so that the black layer was on an opposite side to the antifogging film-attached laminated glass side.

### <External Appearance Evaluation>

Regarding the glass articles A to F obtained above, an external appearance near an outer periphery of the glass thin sheet on the antifogging film-attached laminated glass was visually evaluated by the following evaluation criteria. Table 2 represents the result.
Δ; Glare is present and an end surface is conspicuous, but it is possible to resist actual use.
○; An end surface is somewhat conspicuous due to glare and thickness.
⊚; An end surface is hardly conspicuous.

**[Table 2]**

| Example | Glass thin sheet | | | External appearance evaluation | Scratch resistance |
|---|---|---|---|---|---|
| | Abbreviated name | Thickness [mm] | End surface processing | | |
| 1 | D | 0.7 | Non-processed | Δ | No scratch |
| 2 | E | 0.4 | Non-processed | ○ | No scratch |
| 3 | F | 0.7 | Chamfered | ○ | No scratch |
| 4 | G | 0.4 | Chamfered | ⊚ | No scratch |
| 5 | H | 0.7 | Black layer on peripheral edge portion | ○ | No scratch |
| 6 | I | 0.4 | Black layer on peripheral edge portion | ⊚ | No scratch |

In Table 2, "chamfered" indicates that the end surface is subjected to the polishing processing.

### EXPLANATION OF REFERENCE NUMERALS

1 ... automobile windshield, 2 ... glass substrate, 3 ... functional film, 4 ... glass thin sheet, 5 ... adhesive layer, 6 ... black ceramic layer, 7 ... black layer, S ... adhesive sheet, S1 ... indication layer, S2 ... adhesive layer of adhesive sheet.

## Claims

1. A vehicle glass article comprising:
a glass substrate;
a functional film provided on a surface of at least part of the glass substrate;
a glass thin sheet stuck on the functional film and for sticking, on a principal surface of an opposite side to the functional film side, an adhesive sheet having an adhesive surface smaller than the principal surface; and
an adhesive layer provided between the functional film and the glass thin sheet.

2. The vehicle glass article according to claim 1, wherein a thickness of the glass thin sheet is 1 mm or less.

3. The vehicle glass article according to claim 2, wherein the vehicle glass article is an automobile windshield, and the glass thin sheet is provided outside a visual field area where visibility of a driver in the automobile windshield is secured.

4. The vehicle glass article according to claim 3, wherein the visual field area includes at least a test area B specified in JIS R3212 (1998).

5. The vehicle glass article according to any one of claims 1 to 4, wherein an end surface of the glass thin sheet is subjected to anti-reflection processing.

6. The vehicle glass article according to any one of claims 1 to 5, wherein the functional film is a functional film mainly constituted of resin.

7. The vehicle glass article according to any one of claims 1 to 6, wherein the glass thin sheet has a band-shaped black layer on a peripheral edge portion of at least one principal surface, and an area where an area having the black layer is excepted is larger than the adhesive surface of the adhesive sheet.
